# EUROPÄISCHE PATENTSCHRIFT

(11) **EP 1 327 507 B1**
(45) Veröffentlichungstag und Bekanntmachung des Hinweises auf die Patenterteilung: **09.11.2005**
(21) Anmeldenummer: 02025362.1
(22) Anmeldetag: 14.11.2002
(51) Int. Cl.: B26D 7/00

(54) **Vorrichtung zum Kantentrimmen von Einlagen enthaltenden Bandmaterialien**
Apparatus for side trimming band material containing inclusions
Dispositif pour rogner les côtés de matériaux en bande ayant des inclusions

(30) Priorität: 15.01.2002 DE 10201157
(43) Veröffentlichungstag der Anmeldung: 16.07.2003
(73) Patentinhaber: Karl Eugen Fischer GmbH Maschinenfabrik, D-96224 Burgkunstadt (DE)
(72) Erfinder: Hoffmann, Bernd, 96224 Burgkunstadt (DE); Bär, Manfred, 95336 Mainleus (DE)
(74) Vertreter: Blaumeier, Jörg

(56) Entgegenhaltungen:
- DE-A- 3 608 194
- DE-A- 4 130 799
- DE-C- 4 411 937
- PATENT ABSTRACTS OF JAPAN & JP 03 251440 A (TOYO TIRE & RUBBER CO LTD), 8. November 1991 (1991-11-08)

## Beschreibung

Die Erfindung bezieht sich auf eine Vorrichtung zum Kantentrimmen von Einlagen enthaltenden Bandmaterialien, insbesondere Nylon- oder Stahlcordbändern, durch Abtrennen eines Randbereichs des Bandmaterials, mit einer am Bandmaterial zwischen den in Bandlängsrichtung (Schneidrichtung) verlaufenden Einlagen angreifenden Schneideinrichtung, die in einer, quer zur der Bandlängsrichtung entsprechenden Förderrichtung des an ihr vorbeigeförderten Bandmaterials an einem Rahmengestell pendelnd beweglich aufgehängten Aufnahme gehaltert ist.

Bei einer aus der DE 36 08 194 C2 vorgeschlagenen Schneidvorrichtung der vorstehend beschriebenen Art stellt sich das Schneidmesser von der mittigen Ausgangslage aus gesehen nach links und rechts jeweils V-förmig schräg zur mittigen Messerstellung, was zur Folge hat, dass das Messer nicht mehr in der ursprünglichen Parallelstellung zwischen den Einlagen geführt ist und somit die Gefahr vergrößert ist, dass durch die Schrägstellung des Messers im Schneidkanal zwischen zwei Einlagen das Messer gegen eine Einlage geführt wird und dort diese Einlage freilegt. Dieses Freilegen einer Textil- oder Stahlcordeinlage, die unbedingt vom Bandmaterial überdeckt bleiben sollen, muss aber unbedingt vermieden werden.

Um dies zu erreichen, ist in der DE 44 11 937 C1 bei einer Vorrichtung der eingangs genannten Art bereits vorgeschlagen worden, die Drehachse derart bezüglich der Schneidebene der Schneideinrichtung vertikal beabstandet anzuordnen, dass die bei einer Auslenkung der Aufnahme und der Schneideinrichtung aus der Senkrechten wirkenden Rückstellkräfte geringer sind, als die von den Einlagen auf die Schneideinrichtung ausgeübten, die Führung bewirkenden Auslenkkräfte.

Auch dieses Verfahren ist jedoch in der Praxis mit Schwierigkeiten verbunden. Es hat sich nämlich gezeigt, dass eine hundertprozentige Funktion der Kantentrimmung auch mit dieser Sicherungsmaßnahme nur gegeben ist, wenn das zu schneidende Cordmaterial in einer Toleranz von etwa ± 5 mm zugeführt wird. Beim Überschreiten dieser Toleranz kommt es zu einer unbrauchbaren Schrägstellung der Schneideinrichtung und damit zu Fehlschnitten.

Der Erfindung liegt daher die Aufgabe zugrunde, eine Vorrichtung der eingangs genannten Art so auszugestalten, dass auch bei großen Toleranzen hinsichtlich der Lage der Seitenkante bei der Zuführung des zu schneidenden Cordmaterials ein idealer Schnitt möglichst mittig zwischen zwei Einlagen gewährleistet ist.

Zur Lösung dieser Aufgabe ist, gemäß Anspruch 1 erfindungsgemäß vorgesehen, dass die Drehachse der Pendelaufhängung an einem motorisch in der Pendelebene quer verfahrbaren Schlitten angeordnet ist, und dass eine Einrichtung zur Erfassung der Pendelauslenkung vorgesehen ist, die beim Überschreiten eines vorgegebenen Wertes ein Verfahren des Schlittens in die Auslenkrichtung veranlasst.

Die erfindungsgemäße Vorrichtung ermöglicht ein ideales Kantentrimmen auch dann, wenn durch ungleichmäßiges Aufwickeln des Cordmaterials die Seitenkanten quer zur Förderrichtung sehr stark schwankende Positionen aufweisen, da auch die in der DE 44 11 937 C1 vorgeschlagene Aufhängung zur Erzielung geringer Rückstellkräfte natürlich nur bedingt innerhalb gewisser Winkel funktionieren kann. Die Rückstellkräfte werden ja mit zunehmender Auslenkung immer größer und irgendwann sind sie einfach zu groß um das Freilegen der Einlagen beim Schneiden zu verhindern.

Die erfindungsgemäße Vorrichtung verhindert nunmehr derartige unzulässige Schrägstellungen, indem einfach der Schlitten, an dem die Drehachse des Pendels befestigt ist, in Richtung der Schrägauslenkung verfahren wird. Das Messer wird also, bei nur einer geringen zulässigen Auslenkung, immer mittig zwischen zwei Einlagen geführt, die kurvig entsprechend der kurvigen Lageabweichung der Randkante des Cordbandes verlaufen.

Neben aufwändigen Messeinrichtungen zur Erfassung der Pendelauslenkstellung hat es sich dabei in Ausgestaltung der Erfindung als besonders einfach und zweckmäßig erwiesen, wenn an der Pendelaufhängung ein zwischen zwei verstellbaren Sensoren eingreifender Querarm befestigt ist. Sobald der Querarm einen der beiden Sensoren über deckt, erfolgt eine Verschiebung des Schlittens in Richtung der Schrägauslenkung des Pendels, um diese Schrägauslenkung wieder rückgängig zu machen.

Dabei hat es sich als besonders einfach und in der Wirkungsweise zweckmäßig erwiesen, wenn der Schlitten auf einer durch einen Servomotor beidseits antreibbaren Kugelrollspindel sitzt, sodass die Schlittenbewegung durch bloßes Verdrehen der Kugelrollspindel erzielt werden kann.

Weitere Vorteile, Merkmale und Einzelheiten der Erfindung ergeben sich aus der nachfolgenden Beschreibung eines Ausführungsbeispiels sowie anhand der Zeichnung. Dabei zeigen:
- Fig. 1: eine schematische Darstellung der pendelnden Aufhängung eines Schneidmessers an einem quer zur Schneidrichtung verfahrbaren Schlitten in der idealen Schnittstellung mit senkrecht nach unten hängendem Pendel,
- Fig. 2: die Anordnung nach Fig. 1 bei schräggestellter Pendelaufstellung , bei der eine vorgegebene Schrägstellung überschritten wird und
- Fig. 3: die Anordnung nach Verfahren des Schlittens in Richtung der Pendelauslenkung zur Rückgängigmachung dieser Auslenkung.

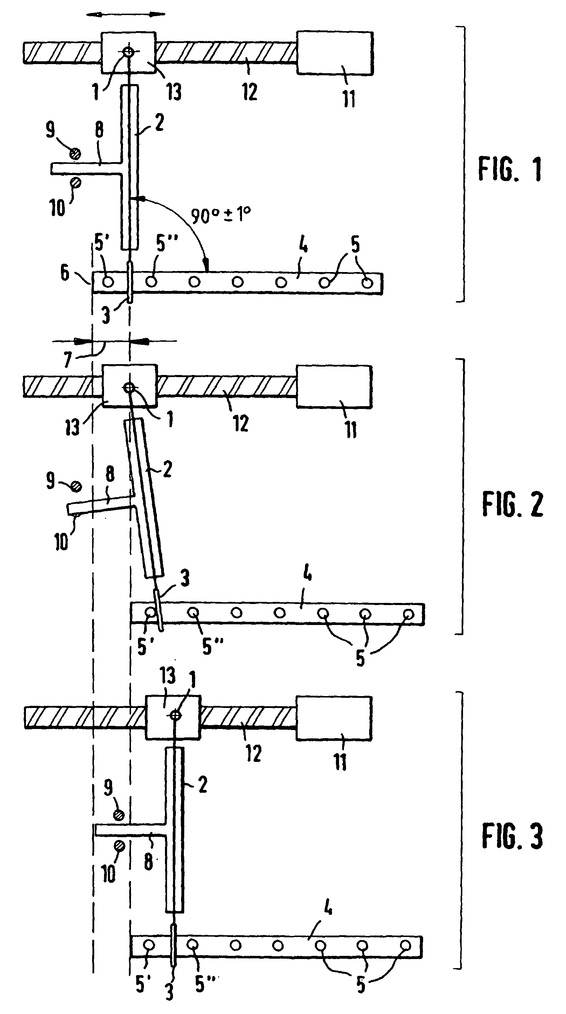

In den Figuren erkennt man die um eine Drehachse 1 pendelnd aufgehängte Aufnahme 2, an der die Schneideinrichtung 3, beispielsweise ein beheiztes Messer, befestigt ist. Das Cordbandmaterial 4 mit den darin enthaltenen Einlagen 5, also Nylon- oder Stahlfäden, schwankt hinsichtlich der Lage seiner zu trimmenden Seitenkante 6 in einem Bereich 7, der mehr als 5 mm, maximal bis 25 mm, betragen kann. Dies führt zu Auslenkungen der pendelnden Aufhängung der Aufnahme 2, wie sie in Fig. 2 angedeutet sind. Ein an der Pendelaufhängung der Aufnahme 2 befestigter Querarm 8, der zwischen zwei Sensoren 9 und 10 einragt, kommt dabei in Überdeckungsstellung mit dem unteren Sensor 10. Dies veranlasst, dass ein Servomotor 11 anläuft, der eine Kugelrollspindel 12, auf der ein die Drehachse 1 enthaltender Schlitten 13 sitzt, sich in der Richtung dreht, dass sich der Schlitten 13 nach rechts, also in Auslenkstellung der Pendelaufhängung verschiebt, sodass er in die Position gemäß Fig. 3 gelangt, in der dann trotz der stark abweichenden Seitenkante des zu trimmenden Cordmaterials die Schneidvorrichtung 3, im Wesentlichen vertikal hängend, genau mittig zwischen den gleichen Einlagen 5' und 5" liegt. Die Abstände der Sensoren werden dabei bevorzugt so eingestellt, dass eine ideale Einstellung der Schneideinheit mit einem 90° Winkel ± 1° zum Cordmaterial zu jeder Zeit gewährleistet ist.

## Patentansprüche

1. Vorrichtung zum Kantentrimmen von Einlagen enthaltenden Bandmaterialien, insbesondere Nylon- oder Stahlcordbändern, durch Abtrennen eines Randbereichs des Bandmaterials, mit einer bei der Verwendung am Bandmaterial zwischen den in Bandlängsrichtung, die der Schneidrichtung entspricht, verlaufenden Einlagen angreifenden Schneideinrichtung (3), die in einer, quer zur der Bandlängsrichtung entsprechenden Förderrichtung des an ihr vorbeigeförderten Bandmaterials an einem Rahmengestell pendelnd beweglich aufgehängten Aufnahme gehaltert ist, **dadurch gekennzeichnet, dass** die Drehachse (1) der Pendelaufhängung an einem motorisch in der Pendelebene quer verfahrbaren Schlitten (13) angeordnet ist, und dass eine Einrichtung (9, 10) zur Erfassung der Pendelauslenkung vorgesehen ist, die beim Überschreiten eines vorgegebenen Wertes ein Verfahren des Schlittens (13) in die Auslenkrichtung veranlasst.

2. Vorrichtung nach Anspruch 1, **dadurch gekennzeichnet, dass** an der Pendelaufhängung ein zwischen zwei verstellbaren Sensoren (9, 10) eingreifender Querarm (8) befestigt ist.

3. Vorrichtung nach Anspruch 1 oder 2, **dadurch gekennzeichnet, dass** der Schlitten (13) auf einer durch einen Servomotor (11) beidseits antreibbaren Kugelrollspindel (12) sitzt.

## Claims

1. Apparatus for side trimming of band materials containing inserts, in particular nylon or steel corded strips, by separating an edge region of the band material, having a cutting device (3) which acts during use on the band material between the inserts extending in the band longitudinal direction - corresponding to the cutting direction - and which is mounted in a seat suspended movably in an oscillating manner transverse to the conveying direction, corresponding to the band longitudinal direction, of the band material passing by the same, **characterised in that** the axis of rotation (1) of the oscillating suspension is disposed on a slide (13) which is motor-driven transversely in the plane of oscillation and **in that** a device (9, 10) is provided for detecting the oscillation excursion and causes movement of the slide (13) in the excursion direction if a specified value is exceeded.

2. Apparatus according to claim 1, **characterised in that** a transverse arm (8) engaging between two displaceable sensors (9, 10) is fixed to the oscillating suspension.

3. Apparatus according to claim 1 or 2, **characterised in that** the slide (13) rests on a ball roll spindle (12) drivable on both sides by a servomotor (11).

## Revendications

1. Dispositif pour rogner les côtés de matériaux en bande contenant des inclusions, en particulier des bandes de NYLON ou des torons d'acier, par séparation d'une zone du bord du matériau en bande, au moyen d'un système de coupe (3) saisissant, lors du fonctionnement, le matériau en bande entre les inclusions cheminant dans la direction longitudinale de la bande, qui correspond à la direction de coupe, ladite bande étant maintenue dans un récepteur mobile à suspension pendulaire sur un cadre fixe transversal à la direction de cheminement, correspondant à la direction longitudinale de la bande qui lui est amenée, **caractérisé en ce que** l'axe de rotation (1) de la suspension pendulaire est monté sur un coulisseau (13) pouvant être déplacé au moyen d'un moteur transversalement au plan d'oscillation, et **en ce qu'**il est prévu pour le contrôle de l'amplitude de l'oscillation pendulaire un système (9, 10), qui, en cas de dépassement d'une valeur prédéterminée, provoque un déplacement du coulisseau (13) dans la direction du dépassement.

2. Dispositif selon la revendication 1, **caractérisé en ce qu'**à la suspension pendulaire est fixé un bras transversal (8) intervenant entre deux palpeurs réglables (9, 10).

3. Dispositif selon l'une des revendications 1 ou 2, **caractérisé en ce que** le coulisseau (13) est monté sur un pivot à billes (12) pouvant être actionné dans les deux sens par un servo-moteur (11).
